# FASCICULE DE BREVET EUROPEEN

(11) **EP 2 064 362 B1**
(45) Date de publication et mention de la délivrance du brevet: **06.03.2013**
(21) Numéro de dépôt: 07823831.8
(22) Date de dépôt: 14.09.2007
(51) Int. Cl.: C23C 2/00, F16C 13/02

(54) **DISPOSITIF DE GUIDAGE D'UNE BANDE DANS UN BAIN LIQUIDE**
VORRICHTUNG ZUR FÜHRUNG EINER SCHNUR DURCH EIN FLÜSSIGKEITSBAD
DEVICE FOR GUIDING A RIBBON THROUGH A LIQUID BATH

(30) Priorité: 18.09.2006 FR 0653803
(43) Date de publication de la demande: 03.06.2009
(73) Titulaire: Siemens VAI Metals Technologies SAS, 42400 Saint-Chamond (FR)
(72) Inventeur: CHALLAYE, Alain, 42290 Sorbiers (FR)
(74) Mandataire: Fischer, Michael
(86) Numéro de dépôt international: PCT/FR2007/051936
(87) Numéro de publication internationale: WO 2008/034994

(56) Documents cités:
- DE-A1- 10 159 617
- FR-A- 1 580 081
- GB-A- 188 442
- JP-A- 3 024 254
- JP-A- 4 346 641
- JP-A- 7 138 722
- JP-A- 2000 120 713
- US-A- 3 068 051
- US-A- 3 675 622

## Description

L'invention a pour objet un dispositif de guidage d'une bande dans un bain de liquide et s'applique spécialement au revêtement en continu d'une bande métallique par immersion dans un récipient contenant un bain de métal en fusion.

On connaît depuis longtemps des procédés de revêtement en continu de bandes métalliques par passage dans un bain de métal en fusion. Par exemple, la bande qui est conditionnée sous forme de bobine, peut être déroulée et soumise, dans une ligne continue, à un décapage puis à un traitement de recuit sous atmosphère neutre, dans un four à la sortie duquel elle est immergée dans un récipient rempli de métal liquide, tel que du zinc ou un alliage de zinc et d'aluminium. Pour cela, la bande doit passer sur deux rouleaux déflecteurs successifs, respectivement un rouleau supérieur qui la dévie vers le bas et un rouleau immergé dans le bain de métal à partir duquel la bande remonte et sort du bain suivant une direction sensiblement verticale, puis est dirigée vers des dispositifs d'essorage et de refroidissement. La bande peut, ensuite, subir divers traitements de finition comme un skin-passage et des traitements chimiques de surface avant d'être réenroulée en bobine.

En raison de la vitesse de défilement assez importante de la bande, le rouleau déflecteur immergé dans le bain tourne à une assez grande vitesse et, en outre, doit supporter la tension de la bande. Il est donc porté par des paliers qui sont soumis à des sollicitations importantes et dont la durée de vie est assez limitée. Ces paliers peuvent être immergés dans le bain ou bien placés à l'extérieur de celui-ci.

Dans la disposition la plus simple qui est décrite, par exemple, dans le document FR-A-2735499, le rouleau déflecteur est porté par deux paliers qui sont montés sur deux tourillons fixes alignés maintenus par deux bras verticaux pénétrant dans le bain. Pour améliorer la résistance des paliers ainsi immergés, leurs éléments constitutifs peuvent être constitués en céramique ou bien, par exemple, en alliage à base de cobalt. Une telle disposition est intéressante en raison de la grande facilité de démontage du rouleau mais la durée de vie des paliers reste limitée. De plus, l'introduction dans le bain des paliers et des bras de support nécessite un élargissement du bac et par conséquent une augmentation du volume de métal liquide.

Une autre possibilité consiste à monter les paliers sur les parois latérales du bac qui doivent donc, être équipées de joints d'étanchéité pour éviter ou, du moins, limiter les fuites du métal liquide dont la pression, au niveau du joint, peut être relativement importante compte-tenu de la densité du métal et de la profondeur d'immersion du rouleau.

Par exemple, le document JP-A-4346641 décrit un joint dans lequel un moteur linéaire ménagé dans la paroi détermine une force électromagnétique de renvoi du métal vers l'intérieur du bain.

Cependant, les deux axes du rouleau qui s'étendent entre chaque extrémité de celui-ci et le palier correspondant présentent nécessairement une certaine longueur et sont donc soumis en raison de la tension appliquée sur la bande, à des efforts transversaux qui provoquent un décentrement de l'axe du rouleau par rapport à l'orifice de passage dans la paroi latérale et, par conséquent un risque de détérioration des joints et d'augmentation des fuites de métal. C'est pourquoi, dans une autre disposition décrite dans le document FR-A-2 721 235 et concernant un bac de décapage à l'acide d'une bande métallique, chaque axe du rouleau traverse la paroi latérale du bac et est porté par un palier monté sur une seconde paroi écartée de la paroi latérale par un espace dans lequel sont recueillies les fuites éventuelles de liquide. Le document JP-A-10251819 décrit une disposition analogue pour un dispositif de galvanisation et prévoit un chauffage du liquide recueilli dans la goulotte, pour le renvoyer dans le bain.

De telles dispositions compliquent l'installation et, en outre, augmentent encore la distance entre le palier et la paroi du bac et, par conséquent, la longueur de l'axe et les risques de décentrement de celui-ci en raison des efforts transversaux appliqués par la tension de la bande. Par ailleurs, si le rouleau doit être démonté pour entretien ou remplacement, l'orifice de passage de l'axe est
largement ouvert et il faut donc, au préalable, vidanger le bac.

Or, bien que l'utilisation de nouveaux matériaux puisse améliorer les performances des rouleaux immergés, ceux-ci doivent encore être démontés assez souvent et il en résulte un arrêt de l'exploitation qui diminue la productivité de l'installation.

Un tel système de guidage de rouleau démontable et immergé dans un bac de liquide et présentant un centrage d'axe amélioré est connu dans DE 101 59 617 A1, toutefois ce système est adapté à guider des bandes de textiles destinées à être teintées ou nettoyées dans ledit liquide. Ainsi, il est présenté un dispositif de guidage d'une bande textile immergée dans un bain liquide contenu dans un bac, comportant un rouleau déflecteur immergé dans le bac entre deux parois latérales de celui-ci, et monté rotatif autour d'un axe sur deux arbres de support alignés traversant respectivement les deux parois latérales du bac, perpendiculairement à celles-ci, en passant dans un orifice de la paroi, jusqu'à une partie d'appui tournant dans un palier de centrage placé à l'extérieur du bac, caractérisé par le fait que chaque palier d'un arbre du rouleau comporte au moins deux organes d'appui rotatifs montés dans un boîtier fixe et écartés l'un de l'autre de façon à supporter des efforts transversaux appliqués sur le rouleau, respectivement un organe d'appui externe et un organe d'appui interne, le boîtier du palier étant appliqué sur un plan d'appui entourant l'orifice de passage de l'arbre et perpendiculaire à l'axe de l'orifice de passage de l'arbre, le long d'une face externe de la paroi latérale du bac, ladite paroi étant munie de moyens de centrage du boîtier sur ledit axe. En particulier, ce dispositif comporte deux joints métal-métal, métal-polymère, polymère-polymère dont l'espacement forme une cavité suffisamment étanche pour que le liquide (jusqu'à ébullition) ne s'échappe pas du bac en cas de démontage du rouleau. Ce principe de joints est inapproprié pour des applications métallurgiques sur une bande métallique immergé dans un bain de métal liquide pouvant atteindre plus de 400°C.

L'invention permet d'apporter une solution à de tels problèmes grâce à une nouvelle disposition des paliers de support des axes d'un rouleau immergé permettant, en particulier, d'assurer un excellent centrage du rouleau et, par conséquent, de diminuer les risques de fuites. En outre, grâce à l'invention, les opérations de démontage et de remontage du rouleau sont beaucoup plus simples que dans les dispositions connues et ne nécessitent pas une vidange préalable du bac.

D'autre part, l'invention est prévue spécialement pour le revêtement d'une bande par un métal liquide mais pourrait aussi s'appliquer chaque fois qu'un rouleau est immergé dans un liquide ou fluide agressif, par exemple un acide ou un électrolyte. L'invention concerne donc, d'une façon générale, un dispositif de guidage d'une bande dans un bain de liquide contenu dans un bac, comportant un rouleau déflecteur immergé dans le bac entre deux parois latérales de celui-ci et monté rotatif autour d'un axe sur deux arbres de support alignés traversant respectivement les deux parois latérales du bac, perpendiculairement à celles-ci, en passant dans un orifice de la paroi et s'étendant jusqu'à une partie d'appui tournant dans un palier de centrage placé à l'extérieur du bac. Conformément à l'invention, chaque palier d'un arbre du rouleau comporte au moins deux organes d'appui rotatifs montés dans un boîtier fixe et écartés l'un de l'autre de façon à supporter des efforts transversaux appliqués sur le rouleau, respectivement un organe d'appui externe et 'un organe d'appui interne placé le plus près possible de la paroi, le boîtier du palier étant appliqué sur un plan d'appui entourant l'orifice de passage de l'arbre et perpendiculaire à l'axe de celui-ci, le long d'une face externe de la paroi latérale du bac, ladite paroi étant munie de moyens de centrage du boîtier sur l'axe de l'orifice de passage de l'arbre du rouleau.

De façon particulièrement avantageuse, chaque arbre de support du rouleau comporte une partie externe s'étendant autour de deux organes d'appui rotatif du palier écartés l'un de l'autre et une partie interne traversant la paroi latérale du bac et enfilée avec un faible jeu dans un conduit cylindrique ménagé sur ladite paroi et délimitant l'orifice de passage de l'arbre.

Ce conduit cylindrique s'étend sur une longueur suffisante pour placer le long dudit conduit au moins un moyen d'étanchéité par production d'un mouvement de retour vers l'intérieur du bac du métal pénétrant dans l'espace annulaire entre l'arbre de support du rouleau et la face interne du conduit cylindrique.

Divers moyens peuvent être utilisés, séparément ou en combinaison, pour assurer cette étanchéité.

Par exemple, au moins une rainure hélicoïdale peut être ménagée le long de la partie interne de l'arbre enfilée dans le conduit cylindrique.

Avantageusement, le dispositif comporte un moyen d'introduction d'un fluide sous pression dans l'espace annulaire résultant du jeu entre la partie interne de l'arbre et le conduit cylindrique limitant l'orifice de passage de l'arbre, pour le maintien de étanchéité avec un débit de fuite du fluide au moins vers l'intérieur du bac.

Mais, si le rouleau est immergé dans un bain de métal liquide tel que du zinc, la paroi latérale du bac peut comporter au moins un moyen d'induction produisant, autour du conduit, cylindrique de passage de l'arbre un champ magnétique susceptible de déterminer un retour vers l'intérieur du bac, du métal infiltré dans l'espace annulaire entre l'arbre et le conduit.

Dans le cas où la paroi latérale du bac est recouverte intérieurement d'un revêtement réfractaire, chaque arbre du rouleau passe avec un faible jeu de rotation dans un orifice de la paroi latérale et est prolongé jusqu'à une face d'extrémité du rouleau par une partie interne enfilée avec un faible jeu dans un conduit cylindrique ménagé sur toute l'épaisseur du revêtement réfractaire de la paroi.

Selon une autre caractéristique particulièrement avantageuse, au moins l'un des deux arbres de support du rouleau est fixé de façon amovible, par une extrémité interne, sur une face d'extrémité correspondante du rouleau et est monté coulissant axialement dans le conduit cylindrique entre une position resserrée de support du rouleau et une position écartée de démontage du rouleau.

De préférence, l'extrémité interne de l'arbre s'engage de façon amovible, par coulissement axial, sur un organe de centrage ménagé sur la face d'extrémité correspondante du rouleau. A cet effet, l'extrémité interne de l'arbre et l'organe de centrage du rouleau peuvent être munis de parties conjuguées ménagées respectivement en creux et en saillie de façon à s'engager l'une dans l'autre par coulissement axial.

Ainsi, pour le démontage du rouleau, il suffit d'écarter latéralement les deux arbres qui restent enfilés dans les orifices traversant les parois et les conduits qui les prolongent et il n'est pas nécessaire de vidanger le bac, l'étanchéité restant assurée.

Avantageusement, après engagement de l'extrémité interne de l'arbre sur l'organe de centrage du rouleau, ce dernier peut être entraîné en rotation par un moyen d'application d'un couple de rotation sur la partie externe de l'arbre.

De préférence la partie interne de l'arbre est revêtue extérieurement d'une matière résistant à l'usure et/ou à une attaque du liquide contenu dans le bac, telle qu'une matière céramique.

Dans un mode de réalisation préférentiel, la partie interne de l'arbre qui traverse la paroi du bac, forme une broche de centrage montée coulissante axialement dans une pièce d'étanchéité en forme de douille creuse ayant une face externe cylindrique enfilée avec un faible jeu dans un conduit cylindrique de la paroi et débouchant à l'intérieur du bac par une extrémité interne fermée par un fond muni d'une partie s'engageant de façon amovible sur un organe de centrage de la face d'extrémité du rouleau. En cas de retrait du palier et de l'arbre, cette douille peut rester enfilée dans le conduit cylindrique de la paroi latérale afin de maintenir l'étanchéité.

Avantageusement, l'arbre est soumis, en service, à un effort axial dirigé vers l'intérieur et prend appui par un épaulement sur la douille, pour l'engagement de l'extrémité interne de celle-ci sur l'organe de centrage du rouleau.

De préférence, la douille d'étanchéité est constituée ou, au moins, revêtue extérieurement d'un matériau résistant à l'usure et/ou à une attaque du liquide contenu dans le bac, par exemple une céramique et le conduit cylindrique de passage de la partie interne de l'arbre est réalisé dans une bague en matériau réfractaire.

Selon une autre caractéristique particulièrement avantageuse, le boîtier du palier est appliqué sur une platine rigide incorporée à la paroi latérale du bac et définissant le plan d'appui orthogonal à l'axe de l'orifice de passage de l'arbre.

De préférence, le boîtier du palier forme, à son extrémité tournée vers le bac, un embout cylindrique centré sur l'axe de l'orifice de passage de l'arbre de support et s'enfilant axialement dans un alésage interne d'un rebord de la platine d'appui entourant l'orifice de passage et ayant une face plane perpendiculaire audit axe sur laquelle vient s'appliquer une bride de serrage ménagée autour de l'embout du boîtier, ladite face plane définissant le plan d'appui.

Selon une autre caractéristique préférentielle, le boîtier du palier est appliqué sur la platine d'appui par des moyens élastiques permettant d'exercer un effort de poussée axiale susceptible d'absorber des dilatations éventuelles.

D'autre part, dans un mode de réalisation préférentiel, les deux organes d'appui rotatif de la partie externe de l'arbre sont montés dans une cage externe formant une cartouche enfilée dans un alésage axial du boîtier du palier et pouvant être retirée du boîtier avec le palier par coulissement axial en laissant le boîtier appliqué sur la platine de centrage.

Par ailleurs, le centrage de l'arbre peut être réglé par introduction de pièces minces d'épaisseur adaptable entre la cartouche portant l'arbre et un alésage du boîtier dans lequel elle est enfilée.

D'autres caractéristiques avantageuses de l'invention apparaîtront dans la description suivante d'un mode de réalisation particulier, donné à titre d'exemple en référence aux dessins annexés.
La figure 1 est une vue schématique, en coupe transversale, d'un dispositif de revêtement d'une bande par immersion dans un bac.
La figure 2 est une vue schématique, en coupe axiale, du rouleau.
La figure 3 est une vue schématique, en coupe axiale, d'un palier de centrage du rouleau.

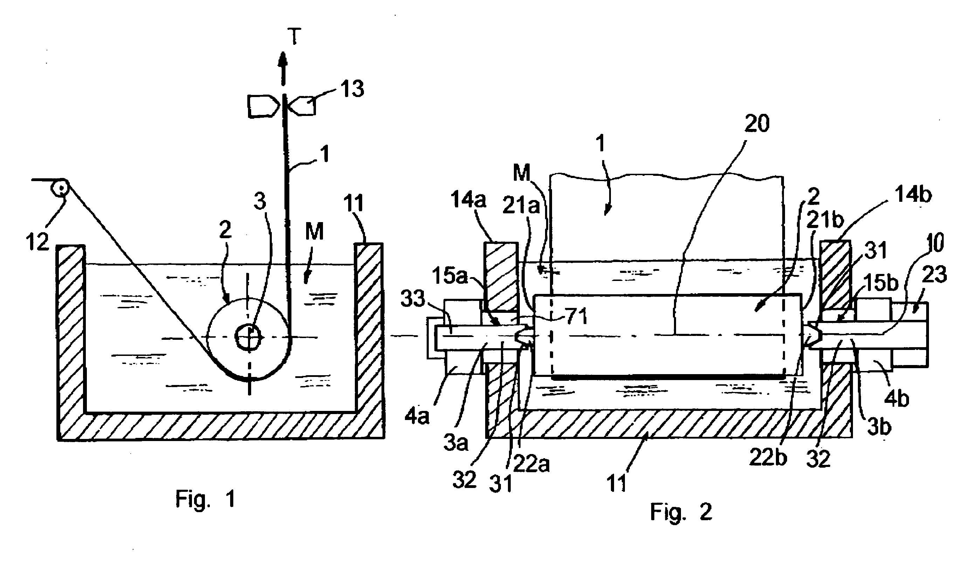

La figure 1 montre schématiquement, en coupe transversale, un dispositif de revêtement d'une bande métallique 1 par immersion dans un bain M de métal liquide remplissant un bac 11 dans lequel est immergé un rouleau déflecteur 2. La bande 1 entraînée par des moyens non représentés de commande du défilement selon une direction longitudinale parallèle au plan de la figure 1, est déviée vers le bas par un rouleau déflecteur supérieur 12 et s'enroule sur un secteur du rouleau immergé 2 de façon à sortir du bain M suivant une direction ascendante sensiblement verticale. La bande 1 est ainsi recouverte, sur ses deux faces, d'une couche de métal liquide dont l'épaisseur est contrôlée par un dispositif 13, par exemple à lame d'air.

Comme le montre la figure 2 qui est une vue schématique en coupe axiale, le rouleau déflecteur 2 est monté rotatif sur deux arbres alignés 3a, 3b, centrés sur l'axe 20 du rouleau et tournant chacun dans un palier 4a, 4b.

Comme indiqué plus haut, ces deux paliers 4a, 4b sont placés à l'extérieur du bac 11. Chacun des deux arbres 3a, 3b comporte donc une partie externe 33 tournant dans le palier 4a, 4b et une partie interne 32 qui traverse la paroi latérale correspondante 14a, 14b du bac 11 en passant par un orifice 15a, 15b, centré sur un axe 10.

Pour permettre le démontage du rouleau 2, celui-ci est relié de façon amovible aux extrémités internes 31 des deux arbres 3a, 3b. A cet effet, le rouleau 2 peut avantageusement être muni, au centre de chacune de ses faces d'extrémité 21a, 21b, d'un tourillon 22a, 22b centré sur l'axe 20 du rouleau et formant une pièce en saillie qui pénètre dans une partie en creux, de forme conjuguée, ménagée sur l'extrémité 31 de l'arbre correspondant 3a, 3b.

De plus, au moins l'un des deux arbres 3a, 3b est monté coulissant axialement de façon à pouvoir être écarté latéralement de la distance nécessaire pour libérer le rouleau 2 afin de le retirer du bain M.

Comme indiqué plus haut, la bande 1 est soumise à un effort de traction et prend donc appui vers le haut sur le rouleau 2 en exerçant des efforts transversaux sur les extrémités 31 des deux arbres 3a, 3b qui sont maintenus par les paliers 4a, 4b.

Selon l'une des caractéristiques de l'invention, ces paliers 4a, 4b sont appliqués directement sur les faces externes 16 des parois latérales 14 du bac 1 de façon à réduire autant que possible la longueur de la partie interne 32 de l'arbre 3 s'étendant en porte-à-faux entre la face d'extrémité 21 du rouleau 2 et un plan d'appui P du palier 4 orthogonal à l'axe 10 de l'orifice de passage 15.

Ainsi, le risque de décentrement de l'arbre 3 par rapport à l'orifice 15 de passage dans la paroi latérale 14 du bac 11 est diminué, sa partie externe 33 étant maintenue encastrée dans le palier 4 appliqué sur la paroi 14 et sa partie interne 32 pouvant passer avec un faible jeu dans une bague d'étanchéité 71 entourant l'orifice de passage 15.

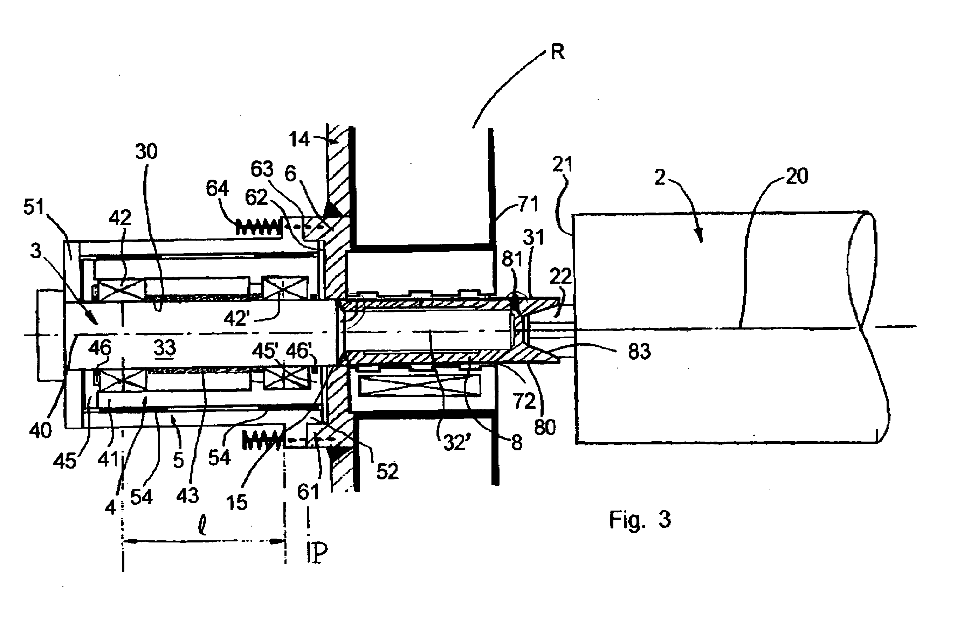

Dans le mode de réalisation préférentiel représenté en détail sur la figure 3, chaque palier 4 comporte, à l'intérieur d'un boîtier 5, deux organes d'appui rotatifs, normalement des roulements coniques 42, 42' qui sont écartés l'un de l'autre d'une distance I afin de réaliser un véritable encastrement de la partie externe 33 de l'arbre 3 enfilée dans les roulements 42, 42' permettant de supporter les efforts transversaux appliqués sur le rouleau 2 par la tension de la bande 1. Une entretoise tubulaire 43 permet de maintenir l'écartement entre les deux roulements écartés 42, 42'. De préférence, l'ensemble est logé dans une pièce cylindrique formant une cartouche 41 fermée par deux fonds 45, 45' et qui est enfilée dans un boîtier 5, celui-ci étant fermé de façon amovible par un couvercle 51. Il est ainsi possible, après retrait du couvercle 51, de faire coulisser l'ensemble de l'arbre 3 et de la cartouche 41 formant le palier 4, dans le boîtier 5 qui reste appliqué sur la paroi latérale 14 du bac 1, afin de dégager le tourillon 22 pour permettre le démontage du rouleau 2.

Par ailleurs, pour assurer le centrage de l'axe 40 du palier 4 et de l'arbre 3 sur l'axe 10 de l'orifice 15 de passage de l'arbre 3 à travers la paroi 14, le boîtier 5 est appliqué sur une platine rigide 6 soudée sur la paroi 14 et entourant l'orifice de passage 15, de façon à définir un plan d'appui P perpendiculaire à l'axe 10 de l'orifice sur lequel est centré l'axe 20 du rouleau. A cet effet, la platine 6 comporte un rebord 61 avec un alésage borgne 62 parfaitement centré sur l'axe 10 et dans lequel vient s'engager un embout 52 ménagé à l'extrémité du boîtier 5 tournée vers la paroi 14, en avant d'une partie élargie formant bride 53 qui vient s'appliquer sur une face annulaire 63 de la platine 6 définissant le plan d'appui P perpendiculaire à l'axe 10, dans une position pour laquelle les extrémités 31 des deux arbres 3a, 3b s'engagent sur les tourillons 22a, 22b de centrage du rouleau 2.

De préférence, le boîtier 5 dans lequel est placé l'ensemble du palier 4 et de l'arbre 3 est appliqué contre la face d'appui 63 de la platine 6 par des organes élastiques de pression 64, par exemple des ressorts associés à des boulons, qui s'engagent dans des alésages filetés ménagés sur le rebord 61 de la platine 6, afin d'appliquer la bride 53 sur la face d'appui 63.

Ces moyens de pression 64 exercent, par l'intermédiaire des paliers 4 et des axes 3, des efforts axiaux opposés sur les deux tourillons 22a, 22b du rouleau 2 qui assurent le maintien de celui-ci en résistant aux efforts transversaux résultant de la traction exercée sur la bande 1, et en absorbant les dilatations différentielles dues à la température du bain M.

D'autre part, des cales minces 54 interposées entre la cartouche 41 et le boîtier 5 permettent de régler avec précision la concentricité entre l'axe 40 du palier 4 enfilé dans le boîtier 5 et l'axe 10 de l'alésage 62 de la platine 6.

En raison de cette parfaite concentricité obtenue grâce au centrage de l'embout 52 dans l'alésage 62 de la platine 6, il est possible de ne laisser qu'un faible jeu entre la face externe 30 de l'arbre 3 et la face interne de l'orifice de passage 15, ce faible jeu étant juste suffisant pour permettre la rotation à grande vitesse de l'arbre 3 autour de son axe 40 qui est parfaitement aligné avec l'axe 10 de l'orifice 15.

Par ailleurs, les deux fonds 45, 45' de la cartouche 41 sont munis de joints annulaires 45, 45' permettant la rotation de l'arbre en assurant l'étanchéité du palier dont le graissage et le refroidissement sont assurés par des circuits ménagés, de façon classique, dans la cartouche 41 et véhiculant un fluide de graissage et un liquide ou un gaz de refroidissement.

Selon une autre caractéristique de l'invention, le maintien de l'étanchéité entre l'arbre 3 et la paroi latérale 14 du bac 1 est assuré le long d'un conduit cylindrique 7 ménagé dans une bague d'étanchéité 71 et s'étendant sur une longueur suffisante pour y placer des moyens d'étanchéité renvoyant vers l'intérieur du bac le métal infiltré dans l'espace annulaire 72 entre l'arbre 3 et le conduit 7.

Il est nécessaire, en effet, pour permettre la rotation de l'arbre 3 avec le rouleau 2, de laisser un jeu minimal entre la face externe de l'arbre 3 et la face interne 70 du conduit cylindrique 7. Le métal liquide M peut donc pénétrer dans cet espace annulaire 72, éventuellement jusqu'au joint 46' entre la cage externe 41 du palier 4 et l'arbre 3.

Comme indiqué plus haut, l'arbre 3 comporte donc une partie externe 33 maintenue dans le palier 4 et une partie interne 32 qui s'étend le long du conduit 7 jusqu'à son extrémité 31 de centrage du tourillon 22 du rouleau 2.

Cependant, en raison du parfait centrage réalisé selon l'invention et du fait que les risques de flexion sont limités par l'encastrement de la partie externe 33 de l'arbre 3 dans le palier 4 maintenu appliqué, le long du plan P, sur la paroi latérale 14 du bac, l'épaisseur du jeu 72 peut être limitée. De plus, divers moyens d'étanchéité ne s'opposant pas à la rotation de l'arbre 3 peuvent être employés pour éviter les fuites de métal.

Par exemple, la surface externe de la partie 32 de l'arbre 3 s'étendant dans le conduit 7 peut être munie d'une rainure en hélice déterminant, sous l'effet de la rotation de l'arbre 3 et de la douille 8, la retenue et le renvoi vers l'intérieur du métal pouvant s'infiltrer dans l'espace annulaire 72.

Il est préférable, cependant, pour assurer une excellente étanchéité, de ménager sur la face interne 70 du conduit 7, des canaux annulaires 73 alimentés par un gaz comprimé, avantageusement un gaz neutre tel que de l'azote, de façon à ménager une sorte de palier fluide le long du conduit 7 entre l'arbre 8 et la paroi 14 du bac 11, le gaz étant injecté à une pression un peu supérieure à la pression du bain de métal liquide M, compte-tenu de la profondeur d'immersion et de la densité du métal, de façon à ménager un léger débit de fuite du gaz vers l'intérieur du bac.

Par ailleurs, la paroi latérale 14 du bac 1,1 est généralement recouverte d'un revêtement réfractaire R dans l'épaisseur duquel peut être ménagé le conduit 7.

Dans le mode de réalisation préférentiel représenté sur la figure 3, ce conduit cylindrique 7 est ménagé dans une bague 71 en matière réfractaire qui est emboîtée dans un lamage ménagé sur la face interne de la platine 6 et s'étend sur toute l'épaisseur du revêtement réfractaire R.

On ne peut, cependant, éviter tout risque de contact entre la partie interne 32 de l'arbre et la bague réfractaire 71. Avantageusement, cette partie 32 de l'arbre 3 peut être revêtue d'une matière céramique résistant à l'usure. Toutefois, dans le mode de réalisation préférentiel représenté sur la figure 3, cette partie interne 32 de l'arbre 3 présente un diamètre réduit et forme une broche de centrage sur laquelle est enfilée, avec un simple jeu de glissement, une pièce tubulaire d'étanchéité 8 en forme de douille creuse ayant une face externe cylindrique 80 passant avec un faible jeu 72, dans le conduit 7 de la bague réfractaire 71 et qui est fermée par un fond 81 formant l'extrémité interne 31 de l'arbre 3. L'extrémité opposée 82 de la douille 8 forme une face annulaire d'appui sur un épaulement 35 de l'arbre 3 limitant la partie externe 33 de celui-ci au niveau de la platine 6, la face externe 80 de la douille 8 ayant le même diamètre que la face externe 30 de la partie externe 33 de l'arbre 3, de façon à former une face continue.

Le fond 81 de fermeture de la douille 8 forme un cône femelle 83 dans lequel vient s'engager un cône mâle de profil conjugué ménagé sur le tourillon 22 de centrage du rouleau 2. L'arbre 3 est monté fixe axialement dans le boîtier 5 de telle sorte que, lorsque ce dernier est appliqué par les organes élastiques de pression 64 contre la platine 6, les deux douilles 8 associées aux deux arbres 3a, 3b et repoussées par les épaulements 35 exercent des efforts axiaux opposés sur les deux tourillons 22a, 22b du rouleau 2 qui est ainsi solidarisé par frottement avec les deux arbres 3a, 3b qui, grâce aux dispositions qui viennent d'être décrites, sont parfaitement centrés sur les axes 10 des deux orifices 15a, 15b et alignés avec l'axe 20 du rouleau. Celui-ci peut être monté fou sur ses deux paliers 4a, 4b mais il peut aussi être entraîné en rotation autour de son axe, pour commander le défilement de la bande, au moyen d'un dispositif de motorisation 23 calé en rotation sur l'un des arbres 3b du rouleau.

D'autres moyens peuvent encore être utilisés pour assurer l'étanchéité le long du conduit 7.

Par ailleurs, il est possible de disposer à l'intérieur de la bague 71 en matière réfractaire, des inducteurs 74 générant des champs magnétiques statiques ou glissants qui peuvent ajouter leur effet ou se substituer au gaz sous pression pour assurer l'étanchéité du bac 11 au niveau de l'orifice.

Il est à noter que ces inducteurs 74 peuvent aussi être utilisés pour chauffer la bague réfractaire 71 autour du conduit 7 afin de maintenir à sa température de fusion le métal liquide pouvant s'infiltrer dans l'espace annulaire 72 et favoriser le retour de celui-ci vers l'intérieur du bac.

Eventuellement d'autres inducteurs peuvent aussi être installés dans le revêtement réfractaire R de la paroi latérale 14 du bac 11 afin de réchauffer l'ensemble du dispositif.

Cependant, pendant l'opération de remplacement du rouleau, il peut être avantageux de laisser se solidifier le métal qui a pu s'introduire dans l'espace annulaire 70, ce qui permet d'assurer une étanchéité complète. Après remise en place du rouleau dans l'axe des arbres 3a, 3b, la bague 71 peut être chauffée au moyen des inducteurs 74 afin de remettre le métal à l'état liquide pour permettre le resserrement des deux arbres et l'engagement de leurs extrémités 31 sur les tourillons 22a, 22b du rouleau 2.

Bien entendu, l'invention ne se limite pas aux détails du mode de réalisation qui vient d'être décrit à titre de simple exemple et couvre au contraire toutes les variantes utilisant des moyens équivalents.

En particulier, l'accouplement entre l'extrémité interne de chaque arbre de support 3 et l'extrémité correspondante 21 du rouleau 2 pourrait être réalisé d'une autre façon, par exemple en ménageant à l'extrémité 31 de l'arbre 3, une partie conique mâle pénétrant dans une cuvette de profil conjugué, ménagée sur la face d'extrémité 21 du rouleau 2.

D'autre part, il suffit, pour démonter le rouleau 2, d'écarter légèrement les deux arbres 3a, 3b mais les dispositions qui viennent d'être décrites permettent aussi, en cas de besoin, de retirer chaque arbre 3a, 3b, avec son palier 4a, 4b, pour entretien ou remplacement. Une telle opération étant moins courante que le simple remplacement du rouleau, il est possible, dans ce cas, de vider le bac 11, au moins jusqu'au niveau des orifices 15. Toutefois, dans le mode de réalisation de la figure 3, la douille d'étanchéité 8 pourrait être montée de façon amovible sur la broche 32' et rester enfilée dans le conduit 7 après retrait de l'arbre 3, afin d'assurer l'étanchéité. Il ne serait alors pas nécessaire de vidanger le bac pour le remplacement des paliers.

De plus, les parois du bac sont généralement recouvertes d'un revêtement réfractaire. Il est alors possible de ménager le conduit 7 de passage de l'arbre 3 de la façon décrite plus haut et représentée sur la figure 3.

Dans les cas, cependant où ce revêtement réfractaire ne serait pas nécessaire, la paroi du bac étant constituée d'une simple tôle, le conduit cylindrique pourrait être réalisé dans une pièce tubulaire s'étendant vers l'intérieur, dans le prolongement de l'orifice de passage de l'arbre, et ayant une longueur suffisante pour assurer l'étanchéité.

## Revendications

1. Dispositif de guidage d'une bande (1) immergée
dans un bain liquide (M) contenu dans un bac (11),
comportant un rouleau déflecteur (2) immergé dans le bac (11) entre deux parois latérales (14) de celui-ci, et monté rotatif autour d'un axe (20) sur deux arbres de support alignés (3) traversant respectivement les deux parois latérales (14) du bac (11),
perpendiculairement à celles-ci, en passant dans un orifice (15) de la paroi, jusqu'à une partie d'appui (33) tournant dans un palier de centrage (4) placé à l'extérieur du bac (11), chaque palier d'un arbre (3) du rouleau (2) comportant au moins
deux organes d'appui rotatifs (42, 42') montés dans un boîtier fixe (5) et étant écartés l'un de l'autre de façon à supporter des efforts transversaux appliqués sur le rouleau (2), respectivement un organe d'appui externe (42) et un organe d'appui interne (42'), le boîtier (5) du palier (4) étant appliqué sur un plan d'appui (P) entourant l'orifice (15) de passage de l'arbre (3) et perpendiculaire à l'axe (10) de l'orifice (15) de passage de l'arbre (3), le long d'une face externe de la paroi latérale (14) du bac (11), ladite paroi (14) étant munie de moyens (61) de centrage du boîtier (5) sur ledit axe (10),
chaque arbre (3) de support du rouleau (2) comportant
une partie externe (33) s'étendant autour des organes d'appui rotatifs (42, 42') du palier (4) et une partie interne (32) traversant la paroi latérale (14) du bac,
**caractérisé par le fait que** la bande est métallique et immergée dans un bain de métal liquide (M) et la partie interne (32) de l'arbre (3) forme une broche de centrage (32') montée coulissante axialement dans une pièce d'étanchéité en forme de douille creuse (8) ayant une face externe cylindrique (80) enfilée avec un faible jeu dans le conduit cylindrique de la paroi (14) et délimitant
l'orifice (15) de passage de l'arbre (3) et débouchant à l'intérieur du bac (11) par une extrémité interne fermée par un fond (81) muni d'une partie s'engageant de façon amovible sur un organe (22) de centrage de la face d'extrémité (21) du rouleau (2), ladite douille (8) restant enfilée dans le conduit cylindrique de la paroi latérale (14) en cas de retrait de l'arbre, afin de maintenir l'étanchéité.

2. Dispositif de guidage selon la revendication 1, **caractérisé par le fait que** au moins l'un des deux arbres (3) de support du rouleau (2) est fixé de façon amovible, par une extrémité interne (31), sur une face d'extrémité (21) correspondante du rouleau (2) et est monté coulissant axialement dans le conduit cylindrique entre une position resserrée de support du rouleau (2) et une position écartée de démontage du rouleau (2).

3. Dispositif de guidage selon la revendication 2, **caractérisé par le fait que** l'extrémité interne (31) de l'arbre (3) s'engage de façon amovible, par coulissement axial, sur un organe de centrage (22) ménagé sur la face d'extrémité correspondante (21) du rouleau (2).

4. Dispositif de guidage selon la revendication 3, **caractérisé par le fait que** l'extrémité interne (31) de l'arbre (3) et l'organe (22) de centrage du rouleau (2) sont munis de parties conjuguées ménagées respectivement en creux et en saillie de façon à s'engager l'une dans l'autre par coulissement axial.

5. Dispositif de guidage selon l'une des revendications 3 et 5, **caractérisé par le fait qu'**il comprend un moyen (23) d'application d'un couple de rotation sur la partie externe (33) de l'un des deux arbres pour l'entraînement en rotation du rouleau (2) après engagement de l'extrémité interne (31) de l'arbre (3) sur l'organe (22) de centrage du rouleau (2).

6. Dispositif de guidage selon l'une des revendications 1 à 5, **caractérisé par le fait que** la partie interne (32) de l'arbre (3) est revêtue extérieurement d'une matière résistant à l'usure et/ou à une attaque du liquide contenu dans le bac, telle qu'une matière céramique.

7. Dispositif de guidage selon la revendication 1, **caractérisé par le fait que**, en service, l'arbre (3) est soumis à un effort axial dirigé vers l'intérieur et prend appui sur la douille (8) pour l'engagement de l'extrémité interne de celle-ci sur l'organe (22) de centrage du rouleau (2).

8. Dispositif de guidage selon l'une des revendications 1 et 7, **caractérisé par le fait que** la douille d'étanchéité (8) est constituée d'un matériau résistant à l'usure et/ou à une attaque du liquide contenu dans le bac, tel qu'une céramique.

9. Dispositif de guidage selon l'une des revendications 1 à 8, **caractérisé par le fait que** le conduit cylindrique de passage de l'arbre (3) est réalisé dans une bague (71) en matière réfractaire.

10. Dispositif de guidage selon l'une des revendications 1 à 9, **caractérisé par le fait que** le conduit cylindrique de passage de l'arbre (3) s'étend sur une longueur suffisante pour placer le long dudit conduit au moins un moyen d'étanchéité par production d'un mouvement de retour vers l'intérieur du bac (11) du métal pénétrant dans l'espace (72) entre l'arbre (3) et la face du conduit cylindrique.

11. Dispositif de guidage selon la revendication 10, **caractérisé par le fait que** le moyen d'étanchéité est constitué d'au moins une rainure hélicoïdale ménagée le long d'une partie interne (32) de l'arbre (3) enfilée dans le conduit cylindrique.

12. Dispositif de guidage selon l'une les revendications 10 et 11, **caractérisé par le fait qu'**il comporte un moyen d'introduction d'un fluide sous pression dans l'espace annulaire (72) résultant du jeu entre la partie interne (32) de l'arbre (3) et le conduit cylindrique limitant l'orifice de passage (15) de l'arbre, pour le maintien de l'étanchéité avec un débit de fuite du fluide au moins vers l'intérieur du bac (11).

13. Dispositif de guidage selon l'une des revendications 10 à 12, **caractérisé par le fait que**, le rouleau (2) étant immergé dans un métal liquide (M) tel que du zinc, la paroi latérale (14) du bac comporte au moins un moyen d'induction (74) pour la production, autour du conduit cylindrique de passage de l'arbre (3), d'un champ magnétique déterminant un déplacement vers le bac du métal infiltré dans l'espace annulaire (72) entre la partie interne (32) de l'arbre (3) et le conduit cylindrique.

14. Dispositif de guidage selon l'une des revendications précédentes, dans lequel chaque paroi latérale (14) du bac (11) est recouverte intérieurement d'un revêtement réfractaire, **caractérisé par le fait que** chaque arbre (3) du rouleau (2) passe avec un faible jeu permettant la rotation de l'arbre, dans un orifice (15) de la paroi latérale (14) et est prolongé jusqu'à une face d'extrémité (21) du rouleau (2) par une partie interne (32) enfilée avec un faible jeu (72) dans un conduit cylindrique ménagé sur toute l'épaisseur du revêtement réfractaire de la paroi (14).

15. Dispositif de guidage selon l'une des revendications précédentes, **caractérisé par le fait que** le boîtier (5) du palier (4) est appliqué sur une platine rigide (6) incorporée à la paroi latérale (14) du bac (11) et définissant le plan d'appui (P) orthogonal à l'axe (10) de l'orifice (15) de passage de l'arbre (3).

16. Dispositif de guidage selon la revendication 15, **caractérisé par le fait que** le boîtier (5) du palier (4) comporte, à son extrémité tournée vers le bac (11), un embout cylindrique (52) centré sur l'axe (10) de l'orifice de passage (15) de l'arbre de support (3) et s'enfilant axialement dans un alésage interne (62) d'un rebord (61) de la platine d'appui (6) entourant l'orifice de passage (15) et ayant une face plane (63) perpendiculaire audit axe (10) sur laquelle vient s'appliquer une bride de serrage (53) ménagée autour de l'embout (52) du boîtier (5), ladite face plane (63) définissant le plan d'appui (P).

17. Dispositif de guidage selon l'une des revendications 15 et. 16, **caractérisé par le fait que** le boîtier (5) du palier (4) est appliqué sur la platine d'appui (6) par des moyens élastiques (64) permettant d'exercer un effort contrôlé de poussée axiale susceptible d'absorber des dilatations éventuelles.

18. Dispositif de guidage selon l'une des revendications précédentes, **caractérisé par le fait que** les deux organes (42, 42') d'appui rotatif de la partie externe (33) de l'arbre (3) sont montés dans une cage externe (41) formant une cartouche enfilée dans un alésage axial (55) du boîtier (5) du palier (4), ladite cartouche pouvant être retirée du boîtier (5) avec le palier (4) par coulissement axial.

19. Dispositif de guidage selon la revendication 18, **caractérisé par le fait que** le centrage de l'arbre (3) est réglé par introduction de pièces minces (54) d'épaisseur adaptable entre la cartouche (41) portant l'arbre (3) et un alésage (55) du boîtier (5) dans lequel elle est enfilée.

## Claims

1. Device for guiding a strip (1) immersed in a liquid bath (M) contained in a tank (11), including a diverting roller (2) immersed in the tank (11) between two side walls (14) of the latter and fitted so as to rotate about an axis (20) on two aligned bearing shafts (3) passing respectively through the two side walls (14) of the tank (11) perpendicular to them and passing into an aperture (15) in the wall as far as a supporting part (33) rotating in a centring bearing (4) positioned outside the tank (11), each bearing of a shaft (3) of the roller (2) including at least two rotating support components (42, 42') mounted in a fixed housing (5) and separated from one another so as to withstand transverse stresses applied to the roller (2), respectively an external support component (42) and an internal support component (42'), the housing (5) of the bearing (4) being applied to a support plane (P) encircling the aperture (15) for the shaft (3) to pass through and perpendicular to the axis (10) of the aperture (15) for the shaft (3) to pass through, along an external face of the side wall (14) of the tank (11), said wall (14) being fitted with means (61) for centring the housing (5) on said axis (10), each roller (2) support shaft (3) including an external part (33) extending around the rotating support components (42, 42') of the bearing (4) and an internal part (32) passing through the side wall (14) of the tank,
**characterised in that** the strip is metal and immersed in a liquid metal bath (M) and the internal part (32) of the shaft (3) forms a centring pin (32') fitted so as to slide axially in a sealing component in the form of a hollow sleeve (8) with a cylindrical external face (80) threaded with a small amount of play into the cylindrical duct of the wall (14) and demarcating the aperture (15) for the shaft (3) to pass through and emerging inside the tank (11) with an internal end closed by a bottom (81) fitted with a part engaging detachably on a component (22) for centring the end face (21) of the roller (2), said sleeve (8) remaining threaded into the cylindrical duct of the side wall (14) in the event of withdrawal of the shaft so as to maintain the seal.

2. Guide device according to claim 1, **characterised in that** at least one of the two roller (2) support shafts (3) is fixed detachably by an internal end (31) on a corresponding end face (21) of the roller (2) and is fitted so as to slide axially in the cylindrical duct between a tightened support position of the roller (2) and a distant position for removal of the roller (2).

3. Guide device according to claim 2, **characterised in that** the internal end (31) of the shaft (3) engages detachably by axial sliding on a centring component (22) arranged on the corresponding end face (21) of the roller (2).

4. Guide device according to claim 3, **characterised in that** the internal end (31) of the shaft (3) and the centring component (22) of the roller (2) are fitted with complementary parts, respectively hollow and projecting, so as to engage in one another by axial sliding.

5. Guide device according to one of claims 3 and 5, **characterised in that** it comprises a means (23) for applying a rotational torque on the external part (33) of one of the two shafts in order rotationally to drive the roller (2) after engagement of the internal end (31) of the shaft (3) on the centring component (22) of the roller (2).

6. Guide device according to one of claims 1 to 5, **characterised in that** the internal part (32) of the shaft (3) is externally coated with a material resistant to wear and/or to attack by the liquid contained in the tank, such as a ceramic material.

7. Guide device according to claim 1, **characterised in that**, in operation, the shaft (3) is subjected to an inwardly directed axial stress and rests on the sleeve (8) for engagement of the internal end of the latter on the centring component (22) of the roller (2).

8. Guide device according to one of claims 1 and 7, **characterised in that** the sealing sleeve (8) is made of a material resistant to wear and/or to attack by the liquid contained in the tank, such as a ceramic material.

9. Guide device according to one of claims 1 to 8, **characterised in that** the cylindrical duct for the shaft (3) to pass through takes the form of a ring (71) made from a refractory material.

10. Guide device according to one of claims 1 to 9, **characterised in that** the cylindrical duct for the shaft (3) to pass through extends over a sufficient length to position along said duct at least one means of sealing by producing a return movement of the metal penetrating into the space (72) between the shaft (3) and the face of the cylindrical duct towards the interior of the tank (11).

11. Guide device according to claim 10, **characterised in that** the sealing means is made up of at least one helical groove arranged along an internal part (32) of the shaft (3) threaded into the cylindrical duct.

12. Guide device according to one of claims 10 and 11, **characterised in that** it includes a means for introducing a fluid under pressure into the annular space (72) resulting from the play between the internal part (32) of the shaft (3) and the cylindrical duct limiting the aperture (15) for the shaft to pass through, in order to maintain the seal with a leakage flow of the fluid at least towards the interior of the tank (11).

13. Guide device according to one of claims 10 to 12, **characterised in that**, the roller (2) being immersed in a liquid metal (M) such as zinc, the side wall (14) of the tank includes at least one induction means (74) for producing, around the cylindrical duct for the shaft (3) to pass through, a magnetic field causing a movement of the metal infiltrating into the annular space (72) between the internal part (32) of the shaft (3) and the cylindrical duct towards the tank.

14. Guide device according to one of the preceding claims, wherein each side wall (14) of the tank (11) is lined internally with a refractory coating, **characterised in that** each shaft (3) of the roller (2) passes with a slight play, providing for the rotation of the shaft, into an aperture (15) in the side wall (14) and is extended as far as an end face (21) of the roller (2) by an internal part (32) threaded with slight play (72) into a cylindrical duct arranged over the entire thickness of the refractory coating of the wall (14).

15. Guide device according to one of the preceding claims, **characterised in that** the housing (5) of the bearing (4) is applied to a rigid plate (6) incorporated into the side wall (14) of the tank (11) and defining the support plane (P) orthogonal to the axis (10) of the aperture (15) for the shaft (3) to pass through.

16. Guide device according to claim 15, **characterised in that** the housing (5) of the bearing (4) includes, at its end turned towards the tank (11), a cylindrical end piece (52) centred on the axis (10) of the aperture (15) for the bearing shaft (3) to pass through and axially threaded into an internal bore (62) of a lip (61) of the bearing plate (6) encircling the aperture (15) and having a flat face (63) perpendicular to said axis (10) to which a pipe clamp (53) arranged around the end piece (52) of the housing (5) is applied, said flat face (63) defining the support plane (P).

17. Guide device according to one of claims 15 and 16, **characterised in that** the housing (5) of the bearing (4) is applied to the support plate (6) by elastic means (64) making it possible to exert a controlled axial thrust stress capable of absorbing possible expansions.

18. Guide device according to one of the preceding claims, **characterised in that** the two rotating support components (42, 42') of the external part (33) of the shaft (3) are fitted in an external cage (41) forming a cartridge threaded into an axial bore (55) of the housing (5) of the bearing (4), said cartridge being removable from the housing (5) with the bearing (4) by axial sliding.

19. Guide device according to claim 18, **characterised in that** the centring of the shaft (3) is governed by the introduction of thin pieces (54) of adaptable thickness between the cartridge (41) carrying the shaft (3) and a bore (55) of the housing (5) into which it is threaded.

## Patentansprüche

1. Vorrichtung zur Führung eines Bandes (1), das in ein in einem Behälter (11) enthaltenes Flüssigkeitsbad (M) eingetaucht ist, welche eine Umlenkwalze (2) aufweist, die in den Behälter (11) zwischen zwei Seitenwänden (14) desselben eingetaucht ist und um eine Achse (20) drehbar auf zwei miteinander fluchtenden Tragwellen (3) gelagert ist, die jeweils eine der beiden Seitenwände (14) des Behälters (11) senkrecht zu dieser durchqueren, indem sie durch eine Öffnung (15) der Wand bis zu einem Stützteil (33) verlaufen, das in einem außerhalb des Behälters (11) angeordneten Zentrierlager (4) rotiert, wobei jedes Lager (3) der Walze (2) mindestens aufweist:
zwei drehbare Stützelemente (42, 42'), die in einem feststehenden Gehäuse (5) angebracht sind und voneinander beabstandet sind, derart, dass sie auf die Walze (2) ausgeübte Querkräfte aufnehmen, nämlich ein äußeres Stützelement (42) und ein inneres Stützelement (42'), wobei das Gehäuse (5) des Lagers (4) gegen eine Stützebene (P) gedrückt wird, welche die Durchgangsöffnung (15) für die Welle (3) umgibt und senkrecht zu der Achse (10) der Durchgangsöffnung (15) für die Welle (3) entlang einer Außenseite der Seitenwand (14) des Behälters (11) verläuft, wobei die besagte Wand (14) mit Mitteln (61) zur Zentrierung des Gehäuses (5) auf der besagten Achse (10) ausgestattet ist, wobei jede Tragwelle (3) der Walze (2) einen äußeren Teil (33), der sich in der Umgebung der drehbaren Stützelemente (42, 42') des Lagers (4) erstreckt, und einen inneren Teil (32), der die Seitenwand (14) des Behälters durchquert, aufweist,
**dadurch gekennzeichnet, dass** das Band metallisch ist und in ein flüssiges Metallbad (M) eingetaucht ist und der innere Teil (32) der Welle (3) einen Zentrierdorn (32') bildet, der axial gleitend in einem Dichtteil in Form einer hohlen Hülse (8), die eine zylindrische Außenseite (80) aufweist, gelagert ist, das mit einem geringen Spiel in den zylindrischen Kanal der Wand (14) eingeschoben ist und die Durchgangsöffnung (15) für die Welle (3) begrenzt und in das Innere des Behälters (11) mit einem inneren Ende mündet, das durch einen Boden (81) verschlossen ist, der mit einem Teil ausgestattet ist, der auf lösbare Weise mit einem Element (22) zur Zentrierung der Stirnseite (21) der Walze (2) in Eingriff steht, wobei die besagte Hülse (8) in den zylindrischen Kanal der Seitenwand (14) eingeschoben bleibt, falls ein Zurückziehen der Welle erfolgt, um die Dichtigkeit aufrechtzuerhalten.

2. Führungsvorrichtung nach Anspruch 1, **dadurch gekennzeichnet, dass** mindestens eine der beiden Tragwellen (3) der Walze (2) mit einem inneren Ende (31) auf lösbare Weise an einer entsprechenden Stirnseite (21) der Walze (2) befestigt ist und in dem zylindrischen Kanal axial gleitend zwischen einer festgespannten Position zur Abstützung der Walze (2) und einer beabstandeten Position zur Demontage der Walze (2) gelagert ist.

3. Führungsvorrichtung nach Anspruch 2, **dadurch gekennzeichnet, dass** das innere Ende (31) der Welle (3) auf lösbare Weise durch axiales Gleiten mit einem Zentrierelement (22) in Eingriff kommt, das an der entsprechenden Stirnseite (21) der Walze (2) ausgebildet ist.

4. Führungsvorrichtung nach Anspruch 3, **dadurch gekennzeichnet, dass** das innere Ende (31) der Welle (3) und das Zentrierelement (22) der Walze (2) mit einander zugeordneten Teilen ausgestattet sind, die mit einer Vertiefung bzw. mit einem Vorsprung ausgebildet sind, sodass sie durch axiales Gleiten ineinander eingreifen.

5. Führungsvorrichtung nach einem der Ansprüche 3 bis 5, **dadurch gekennzeichnet, dass** sie ein Mittel (23) zur Ausübung eines Drehmoments auf den äußeren Teil (33) der einen der beiden Wellen für den Drehantrieb der Walze (2) nach Eingriff des inneren Endes (31) der Welle (3) mit dem Zentrierelement (22) der Walze (2) umfasst.

6. Führungsvorrichtung nach einem der Ansprüche 1 bis 5, **dadurch gekennzeichnet, dass** der innere Teil (32) der Welle (3) außen mit einem Stoff beschichtet ist, der verschleißfest und/oder beständig gegenüber einem Angriff der in dem Behälter, wie etwa einem keramischen Werkstoff, enthaltenen Flüssigkeit ist.

7. Führungsvorrichtung nach Anspruch 1, **dadurch gekennzeichnet, dass** im Gebrauch die Welle (3) einer nach innen gerichteten axialen Beanspruchung ausgesetzt ist und sich auf die Hülse (8) stützt, für den Eingriff des inneren Endes derselben mit dem Zentrierelement (22) der Walze (2).

8. Führungsvorrichtung nach einem der Ansprüche 1 bis 7, **dadurch gekennzeichnet, dass** die Dichthülse (8) aus einem Material besteht, das verschleißfest und/oder beständig gegenüber einem Angriff der in dem Behälter, wie etwa einer Keramik, enthaltenen Flüssigkeit ist.

9. Führungsvorrichtung nach einem der Ansprüche 1 bis 8, **dadurch gekennzeichnet, dass** der zylindrische Kanal für den Durchgang der Welle (3) in Form eines Ringes (71) aus Feuerfestmaterial ausgeführt ist.

10. Führungsvorrichtung nach einem der Ansprüche 1 bis 9, **dadurch gekennzeichnet, dass** sich der zylindrische Kanal für den Durchgang der Welle (3) über eine Länge erstreckt, die ausreichend ist, um entlang des besagten Kanals mindestens ein Dichtmittel anzuordnen, das die Dichtigkeit durch Erzeugung einer Zurückbewegung des in den Raum (72) zwischen der Welle (3) und der Seite des zylindrischen Kanals eindringenden Metalls in Richtung des Inneren des Behälters (11) gewährleistet.

11. Führungsvorrichtung nach Anspruch 10, **dadurch gekennzeichnet, dass** das Dichtmittel aus mindestens einer Spiralnut besteht, die entlang eines inneren Teils (32) der Welle (3) ausgebildet ist, der in den zylindrischen Kanal eingeschoben wird.

12. Führungsvorrichtung nach einem der Ansprüche 10 und 11, **dadurch gekennzeichnet, dass** sie ein Mittel zur Einleitung eines Fluids unter Druck in den Ringraum (72) aufweist, der aus dem Spiel zwischen dem inneren Teil (32) der Welle (3) und dem die Durchgangsöffnung (15) für die Welle begrenzenden zylindrischen Kanal resultiert, zur Aufrechterhaltung der Dichtigkeit mit einem Leckfluss des Fluids wenigstens zum Inneren des Behälters (11) hin.

13. Führungsvorrichtung nach einem der Ansprüche 10 bis 12, **dadurch gekennzeichnet, dass**, wenn die Walze (2) in ein flüssiges Metall (M), wie etwa Zink, eingetaucht ist, die Seitenwand (14) des Behälters mindestens ein Induktionsmittel (74) zur Erzeugung eines Magnetfeldes um den zylindrischen Kanal für den Durchgang der Welle (3) herum aufweist, das eine Bewegung des in den Ringraum (72) zwischen dem inneren Teil (32) der Welle (3) und dem zylindrischen Kanal eingedrungenen Metalls zu dem Behälter hin bewirkt.

14. Führungsvorrichtung nach einem der vorhergehenden Ansprüche, wobei jede Seitenwand (14) des Behälters (11) innen mit einer feuerfesten Verkleidung versehen ist, **dadurch gekennzeichnet, dass** jede Welle (3) der Walze (2) mit einem geringen Spiel, das die Drehung der Welle ermöglicht, durch eine Öffnung (15) der Seitenwand (14) hindurchgeht und bis zu einer Stirnseite (21) der Walze (2) durch einen inneren Teil (32) verlängert ist, der mit einem geringen Spiel (72) in einen zylindrischen Kanal eingeschoben ist, der auf der gesamten Dicke der feuerfesten Verkleidung der Wand (14) ausgebildet ist.

15. Führungsvorrichtung nach einem der vorhergehenden Ansprüche, **dadurch gekennzeichnet, dass** das Gehäuse (5) des Lagers (4) gegen eine starre Platte (6) gedrückt wird, die in die Seitenwand (14) des Behälters (11) eingebaut ist und die Stützebene (P) definiert, die zu der Achse (10) der Durchgangsöffnung (15) für die Welle (3) senkrecht ist.

16. Führungsvorrichtung nach Anspruch 15, **dadurch gekennzeichnet, dass** das Gehäuse (5) des Lagers (4) an seinem dem Behälter (11) zugewandten Ende ein zylindrisches Ansatzstück (52) aufweist, das auf der Achse (10) der Durchgangsöffnung (15) für die Tragwelle (3) zentriert ist und axial in eine innere Bohrung (62) eines Ansatzes (61) der Stützplatte (6) eingeschoben wird, der die Durchgangsöffnung (15) umgibt und eine zu der besagten Achse (10) senkrechte ebene Seite (63) aufweist, an welcher ein Spannflansch (53) zur Anlage kommt, der um das Ansatzstück (52) des Gehäuses (5) herum ausgebildet ist, wobei die besagte ebene Seite (63) die Stützebene (P) definiert.

17. Führungsvorrichtung nach einem der Ansprüche 15 und 16, **dadurch gekennzeichnet, dass** das Gehäuse (5) des Lagers (4) durch elastische Mittel (64) gegen die Stützplatte (6) gedrückt wird, die es ermöglichen, eine kontrollierte axiale Schubkraft auszuüben, die eventuelle Dehnungen aufnehmen kann.

18. Führungsvorrichtung nach einem der vorhergehenden Ansprüche, **dadurch gekennzeichnet, dass** die beiden drehbaren Stützelemente (42, 42') des äußeren Teils (33) der Welle (3) in einem äußeren Käfig (41) angebracht sind, der einen Einsatz bildet, der in eine axiale Bohrung (55) des Gehäuses (5) des Lagers (4) eingeschoben wird, wobei der besagte Einsatz mit dem Lager (4) durch axiales Gleiten aus dem Gehäuse (5) herausgezogen werden kann.

19. Führungsvorrichtung nach Anspruch 18, **dadurch gekennzeichnet, dass** die Zentrierung der Welle (3) durch Einführung dünner Stücke (54) mit anpassbarer Dicke zwischen den die Welle (3) tragenden Einsatz (41) und eine Bohrung (55) des Gehäuses (5), in welche er eingeschoben wird, geregelt wird.
